# EUROPÄISCHE PATENTANMELDUNG

(11) **EP 3 422 539 A1**
(43) Veröffentlichungstag der Anmeldung: **02.01.2019**
(21) Anmeldenummer: 18176013.3
(22) Anmeldetag: 05.06.2018
(51) Int. Cl.: H02K 11/25

(54) **ELEKTROMOTOR FÜR EIN HAUSHALTSGERÄT**

(30) Priorität: 30.06.2017 DE 102017114603
(71) Anmelder: Miele & Cie. KG, 33332 Gütersloh (DE)
(72) Erfinder: Lochner, Thomas, 53902 Bad Münstereifel (DE)

(57) **Zusammenfassung**

Die Erfindung betrifft einen Elektromotor (10) für ein Haushaltsgerät, mit einem Stator (12), welcher zumindest eine Statorspule (14a-14f) aufweist, und einem Rotor, welcher dazu eingerichtet ist, innerhalb oder außerhalb des Stators (12) zu rotieren, wobei an der zumindest einen Statorspule (14a-14f) ein Temperaturfühler (16) angeordnet ist, welcher mittels einer elektrisch isolierenden Folie (18) gegenüber der zumindest einen Statorspule (14a-14f) elektrisch isoliert ist.

## Beschreibung

Die Erfindung betrifft einen Elektromotor für ein Haushaltsgerät, mit einem Stator, welcher zumindest eine Statorspule aufweist, und einem Rotor, welcher dazu eingerichtet ist, innerhalb oder außerhalb des Stators zu rotieren.

Darüber hinaus betrifft die Erfindung ein Haushaltsgerät mit zumindest einem Elektromotor.

Die Temperatur von Elektromotoren wird in einer Vielzahl von Anwendungsbereichen überwacht, um eine ausreichende Betriebssicherheit zu gewährleisten und/oder einer Beschädigung oder einem Funktionsausfall des Elektromotors aufgrund von übermäßiger Erwärmung vorzubeugen.

Zur Überwachung der Temperatur von Elektromotoren werden üblicherweise softwarebasierte Motormodelle eingesetzt, aus welchen in Kombination mit gemessenen Stromstärken die Motortemperatur abgeleitet wird. Aufgrund von Toleranzen bei der Strommessung, Wicklungswiderstandsunterschieden und der begrenzten Definierbarkeit thermischer Randbedingungen werden häufig Elektromotoren mit einer Paketlänge eingesetzt, welche größer ist als tatsächlich notwendig, um die thermische Sicherheit entsprechender Elektromotoren garantieren zu können. Aufgrund der verlängerten Paketlänge wird jedoch ein größerer Bauraum in Anspruch genommen, wobei gleichzeitig die Material- und Herstellungskosten der Elektromotoren erhöht sind.

Die der Erfindung zugrunde liegende Aufgabe besteht somit darin, eine kontinuierliche Bereitstellung von Informationen zu dem tatsächlichen Erwärmungsverhalten eines Elektromotors zu ermöglichen, sodass die Paketlänge von Elektromotoren ohne Beeinträchtigung der thermischen Sicherheit reduziert werden kann.

Die Aufgabe wird gelöst durch einen Elektromotor der eingangs genannten Art, wobei an der zumindest einen Statorspule ein Temperaturfühler angeordnet ist, welcher mittels einer elektrisch isolierenden Folie gegenüber der zumindest einen Statorspule elektrisch isoliert ist.

Die Erfindung macht sich die Erkenntnis zunutze, dass der Einsatz einer elektrisch isolierenden Folie die Anordnung eines Temperaturfühlers unmittelbar an der Statorspule erlaubt. Durch den Temperaturfühler kann die Temperatur an der zumindest einen Statorspule kontinuierlich erfasst und beispielsweise mittels einer Überwachungseinrichtung überwacht werden. Die elektrisch isolierende Folie dient dabei als elektrischer Isolator gegenüber dem Potenzial des Stators bzw. der zumindest einen Statorspule. Vorzugsweise dient die elektrisch isolierende Folie gleichzeitig als Träger des Temperaturfühlers. Außerdem weist eine elektrisch isolierende Folie einen geringeren Wärmewiderstand als ein elektrisch isolierendes Spritzgussteil auf, sodass die Wärmeübertragung bzw. der Wärmefluss innerhalb des Elektromotors nicht wesentlich von der elektrisch isolierenden Folie beeinträchtigt wird.

Vorzugsweise ist der Temperaturfühler an einem Wickelkopf, in der Wicklung oder außerhalb der Wicklung der zumindest einen Statorspule angeordnet. Die elektrisch isolierende Folie kann einfach oder mehrfach gefaltet sein und/oder entlang mehrerer Seiten der zumindest einen Statorspule verlaufen. Die elektrisch isolierende Folie weist vorzugsweise eine Wandstärke in dem Bereich von 0,05 mm bis 0,5 mm auf. Aufgrund der direkten Erfassung der tatsächlichen Temperaturen sind somit geringere thermische Reserven notwendig, wodurch der Materialeinsatz gesenkt werden kann. Dies führt letztendlich auch zu einer Reduzierung der Material- und Herstellungskosten.

In einer bevorzugten Ausführungsform des erfindungsgemäßen Elektromotors ist die elektrisch isolierende Folie zumindest teilweise als Mylar-Folie oder Keramik-Folie ausgebildet. Die Mylar-Folie ist eine biaxial orientierte Polyester-Folie, welche zumindest teilweise aus Polyethylenterephthalat ausgebildet sein kann. Entsprechende Folien weisen geeignete elektrische Isolationseigenschaften auf und sind aufgrund ihrer hohen Zugfestigkeit robust gegenüber externer Zugbeanspruchung. Die elektrisch isolierende Folie kann dabei einlagig oder mehrlagig ausgebildet sein. Im Falle einer mehrlagigen Ausbildung kann eine oder können mehrere Lagen elektrische Leiterbahnen aufweisen, welche aus einem elektrisch leitenden Metall oder einer elektrisch leitenden Metalllegierung ausgebildet sind.

In einer anderen bevorzugten Ausführungsform des erfindungsgemäßen Elektromotors ist der Temperaturfühler in der elektrisch isolierenden Folie eingebettet. Durch die Einbettung des Temperaturfühlers in die elektrisch isolierende Folie wird die Herstellung des Elektromotors vereinfacht, da die elektrisch isolierende Folie und der Temperaturfühler während des Herstellungsvorgangs gleichzeitig eingesetzt werden können und eine aufwändige Positionierung des Temperaturfühlers durch die Einbettung in die elektrisch isolierende Folie entfällt.

In einer Weiterbildung des erfindungsgemäßen Elektromotors ist der Temperaturfühler als Heißleiter oder als Kaltleiter ausgebildet. Sowohl Heißleiter als auch Kaltleiter sind elektrische Widerstände, deren Wert sich mit der Temperatur reproduzierbar ändert. Abhängig von dem Motortyp und den Umgebungsbedingungen, in welchen der Elektromotor eingesetzt wird, kann ein Heißleiter mit einem negativen Temperaturkoeffizienten oder ein Kaltleiter mit einem positiven Temperaturkoeffizienten vorteilhaft sein.

In einer anderen Ausführungsform des erfindungsgemäßen Elektromotors ist der Temperaturfühler elektrisch leitfähig mit zumindest einem elektrischen Leiter verbunden, welcher sich abschnittsweise entlang der zumindest einen Statorspule erstreckt. Vorzugsweise ist der zumindest eine elektrische Leiter mittels einer elektrisch isolierenden Folie gegenüber der zumindest einen Statorspule elektrisch isoliert. Dabei können der Temperaturfühler und der zumindest eine elektrische Leiter mittels einer gemeinsamen elektrisch isolierenden Folie oder mittels separaten elektrisch isolierenden Folien gegenüber der zumindest einen Statorspule elektrisch isoliert sein. Vorzugsweise ist der zumindest eine elektrische Leiter in die elektrisch isolierende Folie eingebettet.

Außerdem ist ein erfindungsgemäßer Elektromotor bevorzugt, bei welchem der zumindest eine elektrische Leiter als Folienkabel oder als Bestandteil einer elektrisch leitfähigen Folienschicht ausgebildet ist. Folienkabel weisen eine äußerst geringe Bauhöhe auf und eignen sich aufgrund ihrer Flexibilität zum Anpassen an Objektformen, wie beispielsweise der Form der zumindest einen Statorspule. Darüber hinaus sind Folienkabel äußerst bauraumsparend und weisen ein geringes Gewicht auf. Wenn der zumindest eine elektrische Leiter als Bestandteil einer elektrisch leitfähigen Folienschicht ausgebildet ist, wird die elektrisch leitfähige Folienschicht vorzugsweise von einer elektrisch nicht-leitfähigen Trägerschicht getragen. Die elektrisch nicht-leitfähige Trägerschicht kann beispielsweise aus Keramikmaterial oder einem elektrisch nicht-leitfähigen Kunststoff ausgebildet sein.

In einer anderen bevorzugten Ausführungsform des erfindungsgemäßen Elektromotors ist der Temperaturfühler als Folien-Temperaturfühler ausgebildet. Wenn der Temperaturfühler als Folien-Temperaturfühler ausgebildet ist, kann die elektrisch isolierende Folie ein Bestandteil des Folien-Temperaturfühlers sein. Folien-Temperaturfühler nehmen lediglich einen geringen Bauraum in Anspruch und weisen ein geringes Gewicht auf. Ferner sind Folien-Temperaturfühler zumindest abschnittsweise flexibel ausgebildet, wodurch die Integration des Folien-Temperaturfühlers erheblich vereinfacht wird. Insbesondere ist der Folien-Temperaturfühler zumindest abschnittsweise mehrlagig ausgebildet.

In einer anderen bevorzugten Ausführungsform des erfindungsgemäßen Elektromotors ist der Temperaturfühler als oberflächenmontiertes Bauelement ausgebildet. Als sogenanntes Surface-Mounted Device (SMD) kann der Temperaturfühler mit einer Leiterplatte verlötet sein. Entsprechende Flachbaugruppen, welche einen Temperaturfühler aufweisen, sind in großer Stückzahl verfügbar und kostengünstig herstellbar, sodass die Gesamtkosten des Elektromotors weiter verringert werden. Wenn der Temperaturfühler als oberflächenmontiertes Bauelement ausgebildet ist, kann die gesamte Flachbaugruppe, welche den Temperaturfühler umfasst, mittels der elektrisch isolierenden Folie gegenüber der zumindest einen Statorspule elektrisch isoliert sein. Ferner kann die gesamte Flachbaugruppe, welche den Temperaturfühler umfasst, in der elektrisch isolierenden Folie eingebettet sein.

Ferner ist ein erfindungsgemäßer Elektromotor bevorzugt, bei welcher an der zumindest einen Statorspule ein Isolationskörper angeordnet ist, welcher als Kunststoff-Spritzguss-Teil ausgebildet ist. Insbesondere, wenn der Elektromotor in einer Modulbauweise gefertigt werden soll, kann der Isolationskörper, welcher vorzugsweise an einer Stirnseite der zumindest einen Statorspule angeordnet ist, ein vollautomatisches Kontaktieren der Motorbestandteile durch eine Schneid-Klemm-Technik erlauben. Der Isolationskörper kann außerdem zur Verschaltung und/oder Kontaktierung mehrerer Statorspulen dienen. In Kombination mit der elektrisch isolierenden Folie ergibt sich somit eine Zwei-Komponenten-Isolation. Vorzugsweise ist der Isolationskörper an der Stirnseite der zumindest einen Statorspule angespritzt, wobei der Isolationskörper auch zur Kontaktierung und/oder Einbettung des zumindest einen elektrischen Leiters dienen kann. Vorzugsweise ist der Isolationskörper aus einem thermoplastischen und/oder duroplastischen Material ausgebildet.

In einer weiteren bevorzugten Ausführungsform des erfindungsgemäßen Elektromotors ist der zumindest eine Temperaturfühler mit einer Auswerteeinrichtung verbunden, welche dazu eingerichtet ist, auf Grundlage des Signals des zumindest einen Temperaturfühlers die Temperatur der zumindest einen Statorspule zu ermitteln. Vorzugsweise erfolgt die Temperaturermittlung mittels einer elektrischen Schaltung der Auswerteeinrichtung und/oder stellt eine digitale und/oder softwarebasierte Auswertung der Signale des zumindest einen Temperaturfühlers dar.

In einer vorteilhaften Weiterbildung umfasst der erfindungsgemäße Elektromotor eine Steuerungseinrichtung, welche dazu eingerichtet ist, den Motorbetrieb in Abhängigkeit der ermittelten Temperatur an der zumindest einen Statorspule zu steuern. Beispielsweise kann das Steuern des Motorbetriebs in Abhängigkeit der ermittelten Temperatur an der zumindest einen Statorspule das Abschalten des Motors bei Erreichen einer vorgegebenen Grenztemperatur oder die Leistungsreduzierung vor Erreichen einer vorgegebenen Grenztemperatur umfassen. Alternativ oder zusätzlich kann das Steuern des Motorbetriebs in Abhängigkeit der ermittelten Temperatur an der zumindest einen Statorspule eine temperaturabhängige Leistungs-, Drehzahl- und/oder Betriebsprogrammanpassung umfassen. Mittels der Steuerungseinrichtung kann auch eine Selbstdiagnose realisiert werden, bei welcher in einem spezifischen Betriebszustand des Elektromotors die Erwärmung erfasst wird. Eine entsprechende Selbstdiagnose erlaubt beispielsweise die Meldung von Filterzuständen oder Verschmutzungszuständen von Motorbestandteilen, wenn sich der Elektromotor aufgrund von Verunreinigungen oder verminderter Kühlluft deutlich erwärmt. Ebenso kann bei einem Betriebsstart, d.h. vor Inbetriebnahme des Elektromotors oder eines Gerätes, welches den Elektromotor umfasst, die Ausgangstemperatur gemessen werden. Wenn die gemessene Ausgangstemperatur außerhalb eines üblichen Temperaturbereichs liegt, kann beispielsweise eine Fehlermeldung ausgegeben werden.

In einer anderen bevorzugten Ausführungsform des erfindungsgemäßen Elektromotors ist der Elektromotor als Synchronmotor, insbesondere als permanenterregter Synchronmotor ausgebildet. Vorzugsweise weist der Elektromotor mehrere Statorspulen auf, wobei an mehreren oder sämtlichen Statorspulen jeweils ein Temperaturfühler angeordnet ist, welcher mittels einer elektrisch isolierenden Folie gegenüber der jeweiligen Statorspule elektrisch isoliert ist. Sämtliche Temperaturfühler können mit einer gemeinsamen Kontaktstelle verbunden sein. Die Umsetzung der Kontaktierung kann beispielsweise über eine Draht-Kontaktierung, ein Stanzgitter oder einen spritzgegossenen Schaltungsträger, also ein sogenanntes Molded Interconnect Device (MID), erfolgen.

Die der Erfindung zugrunde liegende Aufgabe wird ferner durch ein Haushaltsgerät der eingangs genannten Art gelöst, wobei der zumindest eine Elektromotor nach einer der vorstehend beschriebenen Ausführungsformen ausgebildet ist. Hinsichtlich der Vorteile und Modifikationen des erfindungsgemäßen Haushaltsgeräts wird auf die Vorteile und Modifikationen des erfindungsgemäßen Elektromotors verwiesen.

Das Haushaltsgerät kann beispielsweise ein Gebläse sein oder ein Gebläse umfassen. Das Gebläse kann beispielsweise ein Bestandteil einer Dunstabzugshaube sein. Alternativ kann das Haushaltsgerät als Pumpe ausgebildet sein oder eine Pumpe umfassen.

Weitere Merkmale und Details der Erfindung sind der nachfolgenden Figurenbeschreibung und den Ansprüchen zu entnehmen. Es zeigen
- Fig. 1: Teile eines Ausführungsbeispiels des erfindungsgemäßen Elektromotors in einer Schnittdarstellung; und
- Fig. 2: Teile eines Ausführungsbeispiels des erfindungsgemäßen Elektromotors in einer perspektivischen Darstellung.

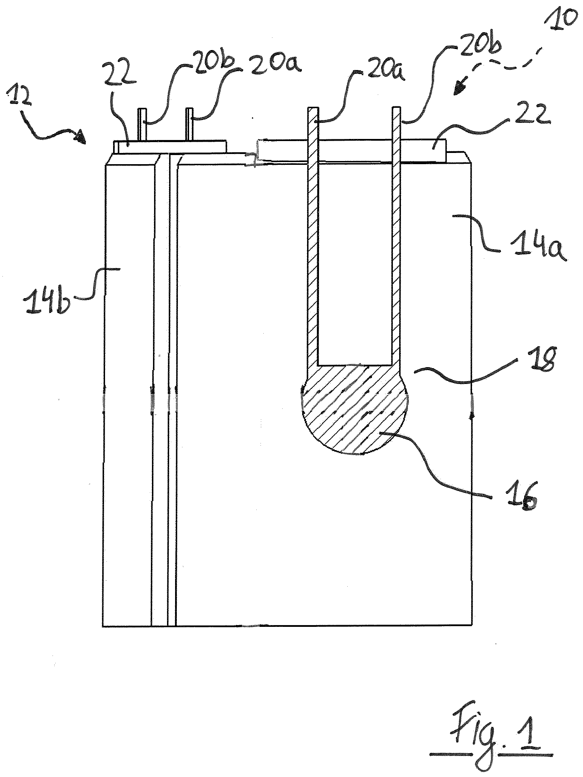

Fig. 1 zeigt zwei Statorspulen 14a, 14b eines Stators 12. Der Stator 12 ist Bestandteil eines Elektromotors 10 für ein Haushaltsgerät. Der Elektromotor 10 weist ferner einen Rotor (nicht dargestellt) auf, welcher dazu eingerichtet ist, innerhalb des Stators 12 zu rotieren.

An den Statorspulen 14a, 14b, nämlich außerhalb der jeweiligen Wicklungen, ist jeweils ein Temperaturfühler 16 angeordnet. Der Temperaturfühler 16 ist mittels einer elektrisch isolierenden Folie 18 gegenüber der jeweiligen Statorspule 14a, 14b elektrisch isoliert.

Die elektrisch isolierenden Folien 18 sind als Mylar-Folien ausgebildet und ummanteln jeweils eine Statorspule 14a, 14b. Ferner weisen die elektrisch isolierenden Folien 18 eine Wandstärke von etwa 0,1 mm auf und sind zweilagig ausgebildet, wobei die Temperaturfühler 16 und die elektrisch leitfähig mit den Temperaturfühlern 16 verbundenen elektrischen Leiter 20a, 20b in den jeweiligen elektrisch isolierenden Folien 18 eingebettet sind.

Die elektrischen Leiter 20a, 20b erstrecken sich abschnittsweise entlang der jeweiligen Statorspule 14a, 14b zu dem entsprechenden Temperaturfühler 16, wobei der Temperaturfühler 16 als Heißleiter oder Kaltleiter ausgebildet sein kann. Die elektrischen Leiter 20a, 20b sind in dem dargestellten Ausführungsbeispiel als elektrisch leitfähige Drähte ausgebildet. Alternativ können die elektrischen Leiter 20a, 20b aber auch als Folienkabel oder als Bestandteil einer elektrisch leitfähigen Folienschicht ausgebildet sein. Ferner sind die Temperaturfühler 16 als oberflächenmontierte Bauelemente ausgebildet. Alternativ können die Temperaturfühler 16 auch als Folien-Temperaturfühler, beispielsweise als mehrlagige Folien-Temperaturfühler, ausbildet sein.

An den Stirnseiten der Statorspulen 14a, 14b ist ein Isolationskörper 22 angeordnet, welcher als Kunststoff-Spritzguss-Teil ausgebildet ist. Der Isolationskörper 22 dient der Verschaltung und Kontaktierung der Statorspulen 14a, 14b. Ferner dient der Isolationskörper 22 als Befestigung für die Temperaturfühler 16. Hierzu weist der Isolationskörper 22 Aufnahmeabschnitte für die elektrischen Leiter 20a, 20b auf, welche mit den Temperaturfühlern 16 verbunden sind.

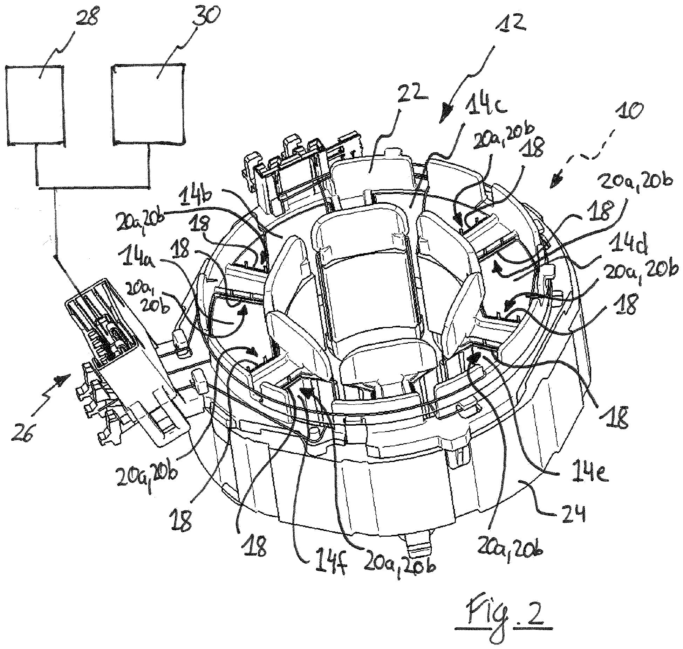

Fig. 2 zeigt den Stator 12 eines Elektromotors 10, wobei der Elektromotor 10 als permanenterregter Synchronmotor ausgebildet und Bestandteil eines Haushaltsgeräts ist. Der Stator 12 weist insgesamt sechs Statorspulen 14a-14f auf, wobei an jeder der Statorspulen 14a-14f zwei Temperaturfühler angeordnet sind. Die Temperaturfühler werden von elektrisch isolierenden Folien 18 verdeckt, welche die Temperaturfühler gegenüber der Statorspule 14a-14f, an welcher die jeweiligen Temperaturfühler angeordnet sind, elektrisch isolieren.

Die jeweils zwei an einer Statorspule 14a-14f angeordneten Temperaturfühler sind auf gegenüberliegenden Seiten der jeweiligen Statorspule 14a-14f angeordnet, wobei sämtliche Temperaturfühler auf einer Kreisbahn um die Mittelachse des Stators 12 beziehungsweise um die Rotationsachse des innerhalb des Stators 12 anzuordnenden Rotors angeordnet sind.

An der Stirnseite der Statorspule 14a-14f ist ein Isolationskörper 22 angeordnet, welcher als Kunststoff-Spritzguss-Teil ausgebildet ist. Der Isolationskörper 22 dient unter anderem zur Kontaktierung und Einbettung der elektrischen Leiter 20a, 20b, welche mit den Temperaturfühlern elektrisch leitfähig verbunden sind. Der Isolationskörper 22 kann beispielsweise aus einem thermoplastischen oder einem duroplastischen Material ausgebildet sein. Durch den Isolationskörper 22 kann die Statorspule 12 des Elektromotors 10 in Modulbauweise gefertigt werden. Der Isolationskörpers 22 weist eine im Wesentlichen ringförmige Grundform auf und ist dazu eingerichtet, mit einem weiteren Isolationskörper, welche weitere Statorspulen trägt, verbunden zu werden. Die gegenseitige Befestigung mehrerer Isolationskörper 22 aneinander kann beispielsweise durch kraft- und/oder formschlüssige Verbindungen, wie etwa Klemm- oder Clipverbindungen, erfolgen. Die Statorspulen 14a-14f und der Isolationskörper 22 sind zumindest teilweise innerhalb eines ringförmigen Gehäuses 24 des Stators 12 angeordnet.

Außerdem weist der Elektromotor 10 eine Auswerteeinrichtung 28 auf, welche über eine Anschlusseinheit 26 des Stators 12 mit den Temperaturfühlern signalleitend verbunden ist. Die Auswerteeinrichtung 28 ist dazu eingerichtet, auf Grundlage der Signale der Temperaturfühler die Temperatur der einzelnen Statorspulen 14a-14f zu ermitteln, wobei die Temperaturauswertung mittels einer elektronischen Schaltung umgesetzt wird.

Neben der Auswerteeinrichtung 28 weist der Elektromotor 10 eine Steuerungseinrichtung 30 auf, welche dazu eingerichtet ist, den Motorbetrieb in Abhängigkeit der ermittelten Temperaturen an den Statorspulen 14a-14f zu steuern. Beispielsweise kann der Elektromotor 10 mittels der Steuerungseinrichtung 30 selbsttätig abgeschaltet werden, wenn eine oder mehrere Statorspulen 14a-14f des Elektromotors 10 eine vorgegebene Grenztemperatur überschreiten. Beispielsweise kann die Leistung des Elektromotors 10 mittels der Steuerungseinrichtung 30 selbsttätig reduziert werden, wenn eine oder mehrere Statorspulen 14a-14f des Elektromotors 10 eine vorgegebene Grenztemperatur überschreiten. Alternativ oder zusätzlich kann die Leistung, die Drehzahl oder ein Betriebsprogramm des Elektromotors 10 in Abhängigkeit der Temperatur der Statorspulen 14a-14f angepasst werden. Ferner kann mittels der Steuerungseinrichtung 30 eine Selbstdiagnose realisiert werden, bei welcher in einem spezifischen Betriebszustand regelmäßig die Erwärmung erfasst wird. Sollte der Elektromotor 10 einen auffälligen Temperaturanstieg zeigen, so können einer Person beispielsweise Informationen über den Zustand ausgewählter Komponenten bereitgestellt werden. Beispielsweise können Informationen über den Zustand eines Filters bereitgestellt werden, damit eine Person prüfen kann, ob der Temperaturanstieg auf eine durch den Filterzustand bedingte verminderte Kühlluftzufuhr zurückzuführen ist.

Der dargestellte Elektromotor 10 kann beispielsweise ein Bestandteil eines Gebläses einer Dunstabzugshaube sein.

### Bezugszeichenliste

- 10: Elektromotor
- 12: Stator
- 14a-14f: Statorspulen
- 16: Temperaturfühler
- 18: elektrisch isolierende Folien
- 20a, 20b: elektrische Leiter
- 22: Isolationskörper
- 24: Gehäuse
- 26: Anschlusseinheit
- 28: Auswerteeinrichtung
- 30: Steuerungseinrichtung

## Patentansprüche

1. Elektromotor (10) für ein Haushaltsgerät, mit
- einem Stator (12), welcher zumindest eine Statorspule (14a-14f) aufweist; und
- einem Rotor, welcher dazu eingerichtet ist, innerhalb oder außerhalb des Stators (12) zu rotieren;
**dadurch gekennzeichnet, dass** an der zumindest einen Statorspule (14a-14f) ein Temperaturfühler (16) angeordnet ist, welcher mittels einer elektrisch isolierenden Folie (18) gegenüber der zumindest einen Statorspule (14a-14f) elektrisch isoliert ist.

2. Elektromotor (10) nach Anspruch 1,
**dadurch gekennzeichnet, dass** die elektrisch isolierende Folie (18) zumindest teilweise als Mylar-Folie oder Keramik-Folie ausgebildet ist.

3. Elektromotor (10) nach Anspruch 1 oder 2,
**dadurch gekennzeichnet, dass** der Temperaturfühler (16) in der elektrisch isolierenden Folie (18) eingebettet ist.

4. Elektromotor (10) nach einem der vorstehenden Ansprüche,
**dadurch gekennzeichnet, dass** der Temperaturfühler (16) als Heißleiter oder Kaltleiter ausgebildet ist.

5. Elektromotor (10) nach einem der vorstehenden Ansprüche,
**dadurch gekennzeichnet, dass** der Temperaturfühler (16) elektrisch leitfähig mit zumindest einem elektrischen Leiter (20a, 20b) verbunden ist, welcher sich abschnittsweise entlang der zumindest einen Statorspule (14a-14f) erstreckt.

6. Elektromotor (10) nach Anspruch 5,
**dadurch gekennzeichnet, dass** der zumindest eine elektrische Leiter (20a, 20b) als Folienkabel oder als Bestandteil einer elektrisch leitfähigen Folienschicht ausgebildet ist.

7. Elektromotor (10) nach einem der vorstehenden Ansprüche,
**dadurch gekennzeichnet, dass** der Temperaturfühler (16) als Folien-Temperaturfühler ausbildet ist.

8. Elektromotor (10) nach einem der vorstehenden Ansprüche,
**dadurch gekennzeichnet, dass** der Temperaturfühler (16) als oberflächenmontiertes Bauelement ausgebildet ist.

9. Elektromotor (10) nach einem der vorstehenden Ansprüche,
**dadurch gekennzeichnet, dass** an der zumindest einen Statorspule (14a-14f) ein Isolationskörper (22) angeordnet ist, welcher als Kunststoff-Spritzguss-Teil ausgebildet ist.

10. Elektromotor (10) nach einem der vorstehenden Ansprüche,
**dadurch gekennzeichnet, dass** der zumindest eine Temperaturfühler (16) mit einer Auswerteeinrichtung (28) verbunden ist, welche dazu eingerichtet ist, auf Grundlage des Signals des zumindest einen Temperaturfühlers (16) die Temperatur der zumindest einen Statorspule (14a-14f) zu ermitteln.

11. Elektromotor (10) nach einem der vorstehenden Ansprüche,
**gekennzeichnet durch** eine Steuerungseinrichtung (30), welche dazu eingerichtet ist, den Motorbetrieb in Abhängigkeit der ermittelten Temperatur an der zumindest einen Statorspule (14a-14f) zu steuern.

12. Elektromotor (10) nach einem der vorstehenden Ansprüche,
**dadurch gekennzeichnet, dass** der Elektromotor (10) als Synchronmotor, insbesondere als permanenterregter Synchronmotor, ausgebildet ist.

13. Haushaltsgerät, mit
- zumindest einem Elektromotor (10);
**dadurch gekennzeichnet, dass** der zumindest eine Elektromotor (10) nach einem der vorstehenden Ansprüche ausgebildet ist.
